# EUROPEAN PATENT SPECIFICATION

(11) **EP 2 482 037 B1**
(45) Date of publication and mention of the grant of the patent: **19.06.2019**
(21) Application number: 12152687.5
(22) Date of filing: 26.01.2012
(51) Int. Cl.: G01C 21/34, G06Q 30/02

(54) **Method of operating a navigation system to provide advertisements**
Verfahren zur Bedienung eines Navigationssystems zur Bereitstellung von Werbung
Procédé de fonctionnement d'un système de navigation pour fournir des publicités

(30) Priority: 31.01.2011 US 201113017327
(43) Date of publication of application: 01.08.2012
(73) Proprietor: HERE Global B.V., 5611 ZT Eindhoven (NL)
(72) Inventor: Agulnek, Jeremy, Chicago, IL Illinois 60618 (US)
(74) Representative: Potter Clarkson

(56) References cited:
- EP-A1- 0 788 067
- WO-A2-2004/044605
- US-A1- 2002 065 604
- US-A1- 2011 082 752
- US-A1- 2011 258 047
- US-A1- 2011 320 275

## Description

### BACKGROUND OF THE INVENTION

The present invention relates to a method and system for operating a navigation system, and more particularly to a method and system for providing advertisements to a mobile device.

Navigation systems are available that provide end users with various navigation-related functions and features. For example, some navigation systems are able to determine an optimum route to travel along a road network or a pedestrian network from an origin location to a destination location in a geographic region. Using input from the end user, the navigation system can examine various potential routes between the origin and destination locations to determine the optimum route. The navigation system may then provide the end user with information about the optimum route in the form of guidance that identifies the maneuvers required to be taken by the end user to travel from the origin to the destination location. Some navigation systems are able to show detailed maps on displays outlining the route, the types of maneuvers to be taken at various locations along the route, locations of certain types of features, and so on.

In order to provide these and other navigation-related functions and features, navigation systems use geographic data. The geographic data may be in the form of one or more geographic databases that include data representing physical features in the geographic region. The geographic database includes information about the represented geographic features, such as one-way streets, position of the roads, speed limits along portions of roads, address ranges along the road portions, turn restrictions at intersections of roads, direction restrictions, such as one-way streets, and so on. Additionally, the geographic data may include points of interests, such as businesses, facilities, restaurants, hotels, airports, gas stations, stadiums, police stations, and so on.

Although navigation systems provide many important features, there continues to be room for new features and improvements. One area in which there is room for improvement relates to receiving and presenting advertisements to the end user of the navigation system. Advertising systems may send advertisements to a navigation system based on the location of the navigation system. Although, the user of the navigation system may be interested in some of the advertisements, it would be beneficial to both the advertiser and the user to provide advertisements that are tailored for the user.

US 2002/0065604 A1 relates to a route guide apparatus for finding a route to a destination that passes near a facility which is a landmark, and supplying the route to a user terminal. The apparatus stores information about the facilities which are landmarks. The apparatus can also store advertisement information, in which case a route is preferably found that passes near a facility which is a landmark and whose advertisement information is to be supplied to the user.

### SUMMARY OF THE INVENTION

To address these and other objectives, the present invention comprises method, a system, a program, and a processor as defined in the independent claims.

### BRIEF DESCRIPTION OF THE DRAWINGS

An exemplary embodiment of the present invention is described herein with reference to the following drawings.
Figure 1 illustrates an embodiment of a system for providing advertising messages in a geographic region.
Figure 2 illustrates a more detailed view of an advertising provider of the system for providing advertising messages in a geographic region.
Figure 3 illustrates a more detailed view of a mobile device of the system for providing advertising messages in a geographic region.
Figure 4 is a block diagram of a geographic database.
Figure 5 is a block diagram of an advertisement database.
Figure 6 is a flow chart for providing advertising messages.
Figure 7 is a flow chart for providing advertising messages.

### DETAILED DESCRIPTION OF THE

### PRESENTLY PREFERRED EMBODIMENTS

### I. Advertisement System Overview

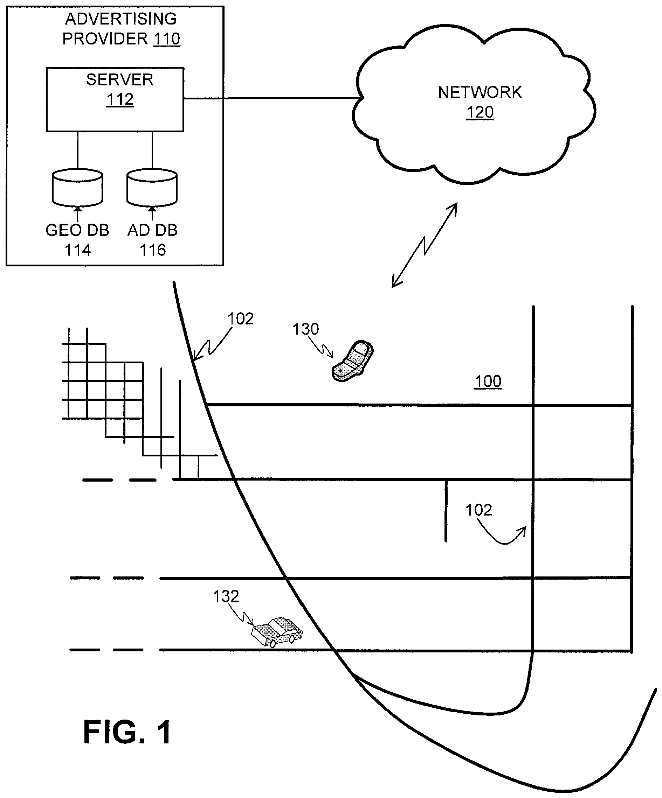

Figure 1 is diagram illustrating a region 100. The region 100 may be a metropolitan area, such as the New York metropolitan area, the Los Angeles metropolitan area, or any other metropolitan area. Alternatively, the region 100 may be a state, province, or country, such as California, Illinois, France, England, or Germany. Alternatively, the geographic region 100 can be a combination of one or more metropolitan areas, states, countries, and so on. Located in the region 100 are a road network and a pedestrian network 102. The road network 102 provides a series of connected road segments and intersections; the pedestrian network comprises sidewalks and pedestrian paths. Furthermore, the region 100 includes a public transit network and bicycle path network.

Figure 1 illustrates an embodiment of a system for providing advertising messages. The system includes an advertising provider 110, a network 120, and a mobile device 130. The mobile device 130 may be a cellular telephone, a mobile phone, a smart phone, a personal digital assistant ("PDA"), a tablet computer, a laptop, a personal navigation device ("PND"), a portable navigation device, a navigation system built into a vehicle and/or any other electronic device. The mobile device 130 may be associated with vehicles 132 that travel on the road network 102 in the region 100. The vehicles 132 may include a variety of cars, trucks, and motorcycles. The mobile device 130 may also be carried by a pedestrian or person traveling on public transit, bicycle or other mode of transportation.

The mobile device 130 includes suitable equipment that enables them to receive the advertising messages sent by the advertising provider 110. The advertising provider 110 transmits data indicating advertisements for points of interests, such as businesses and facilities including retail stores, restaurants, entertainment facilities, and so on, located in the region 100 or for services that are available in the region 100, sometimes referred to as advertising messages ("advertising messages" herein after). The mobile devices 130 that receive the advertising messages may include various different computing platforms.

The advertising provider 110 includes at least a server 112, a geographic database 114 and an advertisement database 116. The geographic database 114 includes geographic data used for navigation-related services. The geographic data may include data representing the road network 102 including road segment data and node data. The road segment data represent roads, and the node data represent the ends or intersections of the roads. The road segment data and the node data indicate the location of the roads and intersections as well as various attributes of the roads and intersections. Other formats than road segments and nodes may be used for the geographic data. The geographic data may also represent points of interests (POIs). The POIs may include gasoline stations, hotels, restaurants, museums, stadiums, offices, automobile dealerships, auto repair shops, buildings, stores, statues, monuments, or geographic landmarks. The data representing POIs indicate the location of the POI, including how to access the POI using the road network (or pedestrian network), and various features or attributes of the POI, including hours of operation, telephone number, types of products and services available at the POI, address, and so on. The geographic data may also represent pedestrian features including pedestrian paths, sidewalks, crosswalks, parks, plazas and so on. The geographic data may also represent public transit networks and bicycle networks. The geographic database 114 may be produced and/or maintained by a map developer, such as NAVTEQ North America, LLC located in Chicago, Illinois.

The network 120 and the communication paths between the adverting provider 110 and the network 120 may be any protocol or physical connection that is used to couple a server to a computer. The communication paths may utilize cellular, Ethernet, wireless, transmission control protocol (TCP), internet protocol (IP), or multiprotocol label switching (MPLS) technologies. In addition, the communication paths between the mobile device 130 and the network 120 may utilize cellular technologies including 3G, 4G, or WiMAX. As used herein, the phrases "in communication" and "couple" are defined to mean directly connected to or indirectly connected through one or more intermediate components. Such intermediate components may include both hardware and software based components.

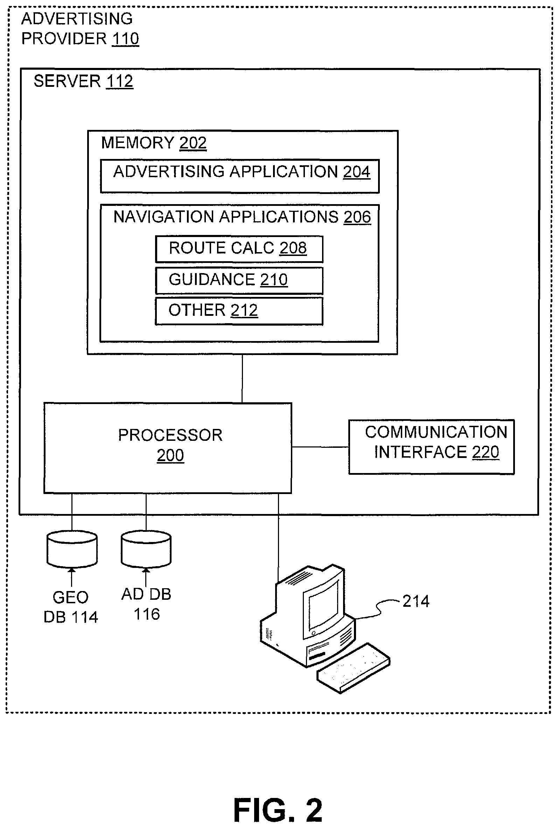

Figure 2 illustrates a more detailed view of the advertising provider 110 of the system for providing advertising messages. The advertising provider 110 creates, formats and distributes the advertising messages to a plurality of mobile devices 130. The advertising provider 110 includes equipment and programming for creating, formatting and transmitting the advertising messages. Included among the equipment and programming of the advertising system is an advertising server 112. The advertising server 112 includes appropriate computer hardware and software to run network applications. The advertising server 112 is maintained and operated by the advertising provider 110. The advertising server 112 includes a processor 200, memory 202 and a communication interface 220. Additional, different, or fewer components may be used for the advertising server 112.

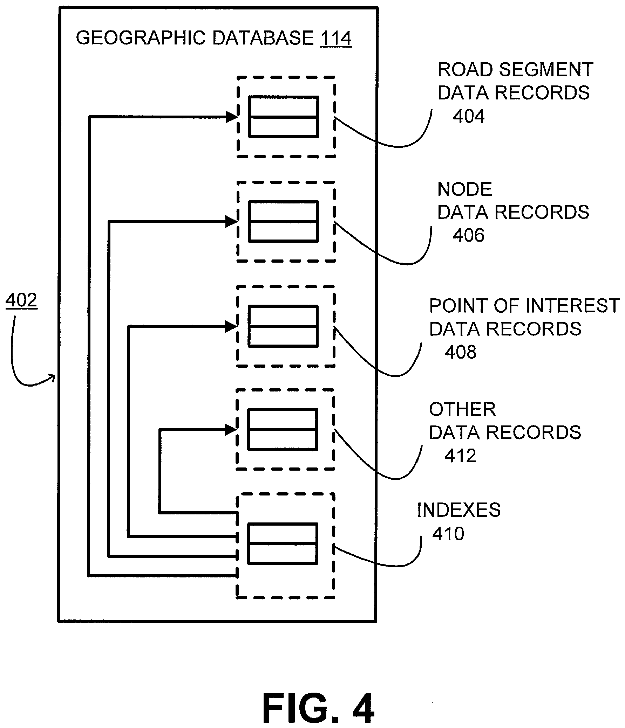

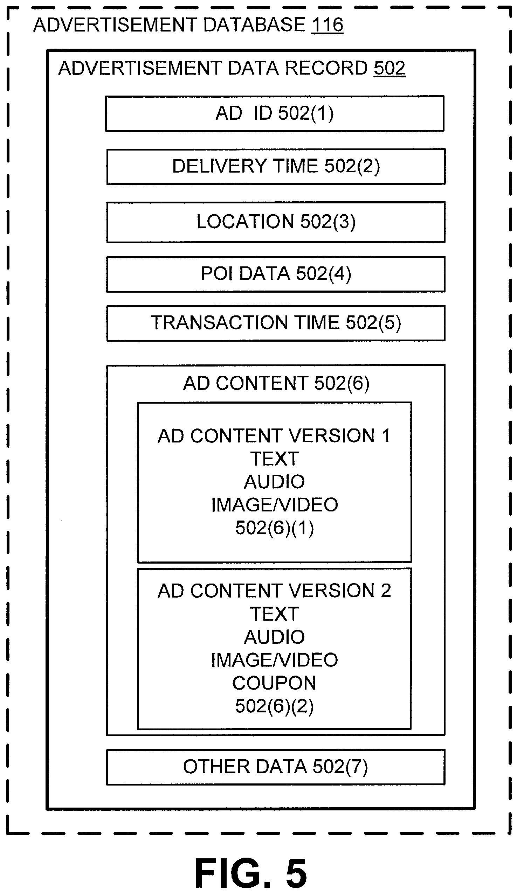

Referring to Figure 2, server applications are included on the advertising server 112. The server applications may be stored on memory comprising one or more hard drive(s) or other computer readable media operated by the server 112 and loaded into a memory 202 of the server 112 to be executed by the processor 200. One of the server applications is an advertising application 204. The advertising application 204 creates, formats and transmits the advertising message to the mobile device 130. The operation of the advertising application will be discussed in detail in conjunction with Figure 4 below. Also associated with the advertising server 112 is an advertisement database 116. The advertisement database 116 includes data representing advertisements and data representing advertising campaigns. The advertisement database 116 is described in detail below in conjunction with Figure 5.

Referring to Figure 2, another server application is a navigation application 206. The navigation application software program 206 may include separate applications (or subprograms) that provide these various navigation features and functions. These functions and features may include route calculation 208 (wherein a route to a destination identified by the end-user is determined), route guidance 210 (wherein detailed directions are provided for reaching a desired destination) and other navigation-related or map-related functions and programming 212, such as map display, vehicle positioning (i.e., map matching), local search, destination selection and so on. The advertising application 204 and the navigation application 206 may be written in a suitable computer programming language such as C, although other programming languages, such as C++ or Java, are also suitable.

Referring to Figure 2, the advertising provider 110 also includes a workstation 214. A representative of the advertising provider 110 may use the workstation 214 to establish advertising campaigns and advertising content for the advertisements database 116. Additionally, the representative may be external to the advertising provider 110 and provide advertising campaigns and advertising content.

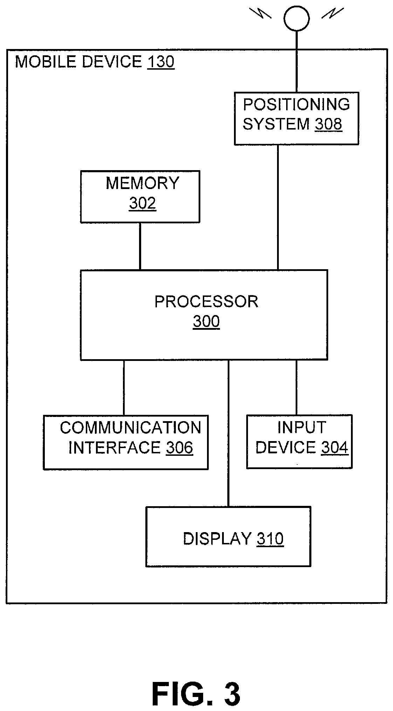

Figure 3 illustrates a more detailed view of the mobile device 130 of the system for providing advertising messages. The mobile device 130 includes a processor 300, a memory 302, an input device 304, a communication interface 306, a positioning system 308, and a display 310. The processor 300 may be any type of processor suitable for mobile devices and/or navigation systems.

The memory 302 may be a volatile memory or a non-volatile memory. The memory 302 may include one or more of a read only memory (ROM), random access memory (RAM), a flash memory, an electronic erasable program read only memory (EEPROM), or other type of memory. The memory 302 may include an optical, magnetic (hard drive) or any other form of data storage device. The memory 302 may be removable from the mobile device 130, such as a secure digital (SD) memory card.

The input device 304 may be one or more buttons, keypad, keyboard, mouse, stylist pen, trackball, rocker switch, touch pad, voice recognition circuit, or other device or component for inputting data to the mobile device 130. The input device 304 and the display 310 may be combined as a touch screen, which may be capacitive or resistive. The display 310 may be a liquid crystal display (LCD) panel, light emitting diode (LED) screen, thin film transistor screen, or another type of display.

The communication interface 306 may include any operable connection. An operable connection may be one in which signals, physical communications, and/or logical communications may be sent and/or received. An operable connection may include a physical interface, an electrical interface, and/or a data interface. An operable connection may include differing combinations of interfaces and/or connections sufficient to allow operable control. For example, two entities can be operably connected to communicate signals to each other directly or through one or more intermediate entities (e.g., processor, operating system, logic, software). Logical and/or physical communication channels may be used to create an operable connection. For example, the communication interface 306 may include an output communication interface devoted to sending signals, data, packets, or datagrams and an input communication interface devoted to receiving signals, data, packets, or datagrams. The communication interface 306 provides for wireless and/or wired communications in any now known or later developed format.

The positioning system 308 includes a global positioning system (GPS), cellular, or similar position sensor for providing location data. The positioning system 308 may utilize GPS-type technology, a dead reckoning-type system, or combinations of these or other systems. The positioning system 308 may include suitable sensing devices that measure the traveling distance, speed, direction, and so on, of the vehicle 132. The positioning system 308 may also include appropriate technology to obtain a GPS signal.

In another embodiment, the mobile device 130 may include a geographic database and navigation-related and map-related application software program(s) that provide these various navigation and map features and functions, such as route calculation, route guidance, map display, vehicle positioning, local search, destination selection and so on.

### II. Geographic Database and Advertisement Database

In order to provide navigation-related features and functions, the advertising provider 110 uses the geographic database 114. The geographic database 114 includes information about one or more geographic regions. The geographic region may correspond to a metropolitan or rural area, a state, a country, or combinations thereof, or any other area. Located in the geographic region are physical geographic features, such as roads, points of interest (including businesses, municipal facilities, etc.), lakes, rivers, railroads, municipalities, etc.

The road network includes, among other things, roads and intersections located in the geographic region. Each road in the geographic region is composed of one or more road segments; a road segment represents a portion of the road. Each road segment is associated with its two nodes; one node represents the point at one end of the road segment and the other node represents the point at the other end of the road segment. The node at either end of a road segment may correspond to a location at which the road meets another road, i.e., an intersection, or where the road dead-ends. The road segments may include sidewalks and crosswalks for travel by pedestrians. The geographic region also includes points of interest, such as businesses, facilities, restaurants, hotels, gas stations, retail stores, stadiums, police stations, and so on.

Referring to Figure 4, the geographic database 114 contains data 402 that represents some of the physical geographic features in the geographic region. The data 402 contained in the geographic database 114 includes data that represent the road network for travel by vehicles and the network for travel by pedestrians. In the embodiment of Figure 4, the geographic database 114 that represents the geographic region contains at least one road segment data record 404 (database record may also be referred to as "entity" or "entry") for each road segment 404 in the geographic region. The geographic database 114 that represents the geographic region also includes a node data record 406 for each node in the geographic region. The terms "nodes" and "segments" and "links" represent only one terminology for describing these physical geographic features, and other terminology for describing these features is intended to be encompassed within the scope of these concepts.

The road segment data record 404 includes a segment ID by which the data record can be identified in the geographic database 114. Each road segment data record 404 has associated with it information (such as "attributes", "fields", etc.) that describes features of the represented road segment. The road segment data record 404 may include data that indicate a speed limit or speed category (i.e., the maximum permitted vehicular speed of travel) on the represented road segment. The road segment data record 404 may also include data that indicate a classification such as a rank of a road segment that may correspond to its functional class that indicates whether the road segment is a highway, residential road and so on. The road segment data record 404 may also include data that indicate a sidewalk associated with the road segment.

The road segment data record 404 may also include or be associated with other data that refer to various other attributes of the represented road segment. The various attributes associated with a road segment may be included in a single road segment record, or may be included in more than one type of record which cross-references to each other. For example, the road segment data record 404 may include data identifying the number of lanes and the width of the lanes comprising the road segment. The other data may indicate what turn restrictions exist at each of the nodes which correspond to intersections at the ends of the road portion represented by the road segment, the name or names by which the represented road segment is known, the length of the road segment, the street address ranges along the represented road segment, the permitted direction of vehicular travel on the represented road segment, whether the represented road segment is part of a controlled access road (such as an expressway), a ramp to a controlled access road, a bridge, a tunnel, a toll road, a ferry, and so on.

The road segment data record 404 also includes data identifying the endpoints of the road segment and the location (e.g., the latitude and longitude) of the endpoints. In one embodiment, the endpoint data references node data records 406 defined for the nodes corresponding to the endpoints of the represented road segment. By convention, each road segment is considered to have a "reference" or "left" endpoint and a "non-reference" or "right" endpoint. The left endpoint may be the node having greater longitudinal coordinates, or in the case in which the longitudinal coordinates are the same, the node having the lesser latitude. Of course, which node is defined as the left or right endpoints can be alternatively defined. Each node data record 406 includes a node ID by which the record can be identified in the geographic database 114. The node data record 306 also includes data identifying the geographic coordinates (e.g., the latitude, longitude, and optionally altitude) of the represented node. The node data record 406 also includes data identifying road segments that connect to the node to form an intersection. At the intersection, each of the two roads may be represented by two road segments (located on opposite sides of the center of the intersection) each having an endpoint at the node. In this example of a standard four-way intersection, the connecting segment data includes four segments IDs identifying the four road segments that connect to the node to form the intersection. The node data record 406 may also include other data that refer to various other attributes of the nodes, such as the presence of a crosswalk.

The geographic database 114 also contains point of interest data records 408 that represent points of interest, such as businesses, facilities, restaurants, hotels, gas stations, retail stores, stadiums, police stations, and so on. The point of interest data record includes data that describes features of the represented point of interest. Each point of interest 408 includes a point of interest ID by which the record can be identified in the geographic database 114. The point of interest data record 408 also includes data identifying the location of the point of interest. The location information may provide the geographic coordinates (e.g., the latitude, longitude, and optionally altitude) of the represented point of interest, the address of the point of interest or another location identifier. The point of interest data record 408 also includes data identifying a type of point of interest, such as a category as well as sub-categories. For example, the type of point of interest may be a restaurant serving French food. The point of interest data record 408 also includes data identifying a business chain name if any is associated with the point of interest. The point of interest data record 408 may further include data that indicates a phone number, an associated website, hours of operation, and so on of the point of interest.

The geographic database 412 may also include other kinds of data. The other kinds of data 412 may represent other kinds of geographic features or anything else. The geographic database 114 also includes indexes 410. The indexes 410 may include various types of indexes that relate the different types of data to each other or that relate to other aspects of the data contained in the geographic database 114. For example, the indexes 410 may relate the nodes in the node data records 406 with the end points of a road segment in the road segment data records 404. As another example, the indexes 410 may relate point of interest data in the point of interest data records 408 with a road segment in the road segment data records 404.

In order to provide advertising messages, the advertising provider 110 uses the advertisement database 116 that includes data representing advertisements and data representing advertising campaigns. Referring to Figure 5, the advertisement database 116 contains advertisement data records 502 that represent content and campaign information for the advertisement or advertising messages. The advertisement data 502 includes an advertisement ID 502(1) by which the advertisement data can be identified in the advertisement database 116. Each advertisement content data record 502 has associated with it information that provide information regarding the advertising campaign and the content for the advertisement message.

Referring to Figure 5, the advertisement data 502 includes data that indicate conditions on the delivery of the advertisement and that provide guidelines and information for the advertising campaign. In one embodiment, the advertisement data 502 provides how the advertisement will be targeted to mobile device 130. In one embodiment, the advertisement data 502 include data representing delivery time 502(2) or when the advertisement should be delivered, such as time of the day for delivery, between certain hours of the day, on certain days of the week, and so on.

The advertisement data 502 includes data representing locations 502(3) for delivery of the advertisement or where the mobile device is located to be target with the advertisement, such as to any mobile device 130 in the geographic region, to mobile devices located in a defined portion of the geographic region, such as within a region defined by a polygon or a circle centered on a defined point location, and so on. In one embodiment, the advertisement is targeted based on the mobile device's real time or current location. For this embodiment, the location data 502(3) specifies a geo-fenced area or a defined area, and the advertisement is intended to be sent to a mobile device 130 located within the geo-fenced area and not to the mobile devices located outside of the geo-fenced area.

The advertisement data 502 includes POI data 502(4) that identifies the point of interest associated with the advertisement, such as an ID of a point of interest that identifies the point of interest represented in the geographic database 114. The point of interest associated with the advertisement is typically a business, such as a retail establishment, restaurant, service establishment and so on. The POI data 502(4) provides the location of the point of interest associated with the advertisement, such as an address, latitude and longitude position, or other location reference system. The POI data 502(4) may also provide further information regarding the point of interest, such as business hours, point of interest category, telephone number, website, and other details regarding the point of interest.

In one embodiment, the advertisement data 502 includes data representing a transaction time 502(5) to visit the point of interest to obtain the product or service offered by the point of interest. For example, the advertisement data 502 represents an advertising campaign for a coffee shop, and the time it would typically take for the recipient to obtain a cup of coffee upon entering the coffee shop is 4 minutes, so the transaction time is 4 minutes. In another example, the advertisement data 502 represents an advertising campaign for a diner, and the time it would typically take for the recipient to have a meal at the diner is 30 minutes, so the transaction time is 30 minutes. The transaction time data 502(5) may indicate different transaction times for different times of the day and days of the week. For example, the transaction time for a cup of coffee at the coffee shop may be 5 minutes between 8:00am and 9:00am, and 3 minutes between 1:00pm and 7:00pm. In a further embodiment, the same point of interest, such as a sit down restaurant, may have different transaction times for different advertisement incentives. For example, the transaction time for an incentive of a free dessert with purchase of a dinner entrée is the time it would take a typical end user to consume both the entree and dessert, whereas a transaction time for an incentive of 10% off of breakfast is the time it would take a typical end user to consume breakfast.

The advertisement data 502 also includes data representing content 502(6) for the advertising message, such as text, audio, images and video. In one embodiment, the advertisement database 116 includes more than a single advertisement content for each advertisement message. In another embodiment, the advertisement database 116 includes more than one version of advertisement content for the advertising message for a single point of interest or service. Referring to Figure 5, a first version of the advertisement content 502(1)(1) comprises text, audio, images and/or video and a second version of the advertisement content 502(1)(2) comprises text, audio, images and/or video as well as a coupon or other incentive to encourage the advertising recipient to visit the associated point of interest or request the associated service. The first version of content is different from the second version of content. For example, a sporting goods store has a first version of advertisement content comprising a banner ad with text and images and a second version of advertisement content comprising a coupon with text and images. For the embodiment with multiple versions of advertisement content, the advertisement data record 502 may include a transaction time corresponding to each version of the advertisement content. For example, the banner ad would have a transaction time of zero minutes, whereas the coupon would have a transaction time of ten minutes.

The advertisement data 502 includes other data 502(7). Other data 502(7) may indicate to whom the advertising message should be delivered, such as every mobile device 130, only mobile devices 130 whose users meet defined demographic information, users with defined preferences, users with behavioral patterns, such as past transactions or interests in prior advertisements, and so on. Additionally, the other data 502(7) may include pricing information for the advertisement. For example, a banner advertisement may cost $0.01 to deliver as an advertising message, whereas a coupon may cost $0.10 to deliver as an advertising message.

In one embodiment, the advertisement database 116 is generated by representatives of the advertising provider 110 using the workstation 214. For example, representatives of the advertising provider 110 may communicate with business owners and advertising agencies to establish advertisement data records 502 including advertising campaigns and advertising content for the advertisements database 116. Additionally, the advertising provider 110 may have a web-base application to enable business owners and advertising agencies establish advertisement data records 502 including advertising campaigns and advertising content for the advertisements database 116. For example, the representative or business owner may submit one or more advertisement content versions, such as a coupon and a banner advertisement. The representative or business owner may define a geo-fence for the location to target the advertisement. The representative or business owner may specify a transaction time for each version of advertisement content submitted, such as transaction time of three minutes for the coupon and zero minutes for the banner. The representative or business owner may further specify an amount of money to spend per week or month on serving the advertisement messages and well has how much to spend per advertisement message.

### III. Route and Time Dependent Advertising

As discussed above in conjunction with Figure 2, the advertising provider 110 includes the advertising program 204 that provides advertisement messages for various mobile devices 130. In one embodiment, the advertising program 204 provides route and time dependent advertisements to mobile devices 130.

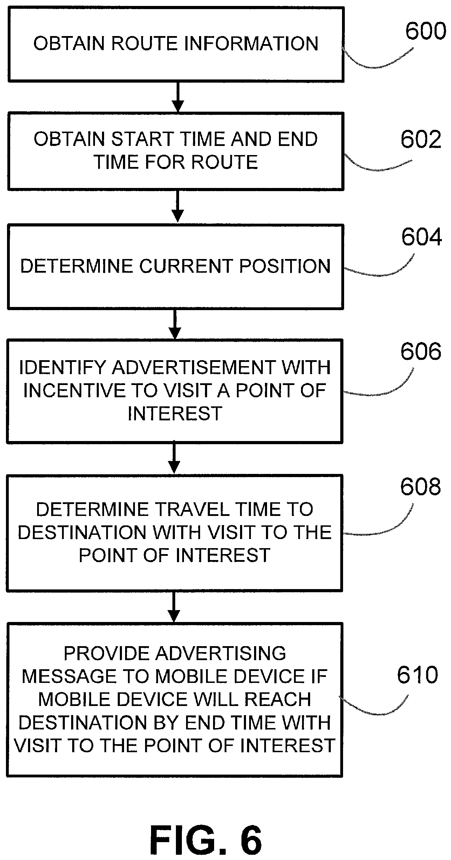

Figure 6 illustrates a flow chart of the steps for providing a route and time dependent advertisement. At step 600, the advertising program 204 obtains route information regarding the route currently traveled or to be traveled. In one embodiment, the route information is obtained from the navigation program 206, including the route calculation application 208. Typically, a user of the mobile device 130 requests a route from a starting location to a desired destination. The starting location may be the current location of the mobile device 130 provided by the positioning system 308. Alternatively, the user of the mobile device 130 may provide the starting location via the input device 304. The user also provides the desired destination. In one embodiment, the desired destination may be obtained from a calendar application that lists appointments and locations of those appointments. In addition to the starting location and desired destination, the route calculation application 208 may also be provided with other data or parameters, such as route preferences. Given at least the identification of the starting location and the destination location, the route calculation application 208 determines one or more solution routes between the starting location and the destination location. A solution route is formed of a series of connected road segment over which the end user can travel from the starting location to the destination location.

When the route calculation application 208 calculates a route, it accesses the geographic database 114 and obtains the road segment data records 404 and/or other data. In addition to traveling on the road network, the route calculation application 208 may calculate a route that allows the user of the mobile device 130 to travel along a transit network comprising trains, subways, buses and so on. Moreover, the route calculation application 208 may calculate a route that allows the user of the mobile device 130 to travel along a pedestrian network comprising sidewalks, crosswalks and pedestrian paths. Furthermore, the route calculation application 208 may calculate a route that allows the user of the mobile device 130 to travel along the road network, transit network and pedestrian network in a single route. The route calculation application 208 may use various means or algorithms and various data from the geographic database 114 in determining solution routes. Any suitable route calculation method now known or developed in the future may be employed.

Referring to Figure 6, the advertising program 204 obtains a start time and an end time for the route at step 602. In one embodiment, the start time is the current time of the request for the route. In another embodiment, the user of the mobile device 130 provides a start time as some specified time in the future; the start time may be specified as a range, such as between 8:00am and 8:10am. The user of the mobile device 130 provides the end time when requesting the route. In one embodiment, the start and/or end time may be obtained from a calendar application that lists an appointment and a location of the appointment. For example, the user must be at his or her office address for a meeting at 8:30am.

As the mobile device 130 travels along the route, the advertising program 204 determines the current position of the mobile device 130, at step 604. In one embodiment, the server periodically obtains the current position of the mobile device 130. The positioning system 308 determines the location, direction, orientation and/or speed of the mobile device 130. The current position may be provided to the server 112 in terms of latitude and longitude coordinates. In one embodiment, the mobile device 130 runs an application that requests an advertisement message from the server 112 and includes an identification of the mobile device 130 as well as the current position information with the request to the server 112. Using the current position information, the advertising program 204 may identify on which road segment the mobile device 130 is currently traveling on by map matching.

At step 606, the advertising program 204 identifies an advertisement having an incentive to visit a point of interest associated with the advertisement. For example, the incentive is a coupon, a promotion with discount on purchase, a limited time offer for a product or service offered by the point of interest. The incentive to visit the point of interest is designed to encourage the user of the mobile device to travel to the point of interest and use the coupon or take advantage of the promotion or offer to obtain the product or the service from the point of interest. In one embodiment, the advertisement program 204 identifies the advertisement based on the current position of the mobile device 130. The advertising program 204 accesses the advertisement database 116 to identify one of the advertisement data records 502 whose location data 502(3) matches the current position of the mobile device 130. For example, the location data 502(3) may specify a geo-fence or geographic region around the location of the point of interest, and the current position of the mobile device 130 is located with the geo-fence. In other embodiments, the advertisement selected may be based upon demographics of the user of the mobile device, preferences and behavior patterns of the user of the mobile device.

At step 608, the advertising program 204 determines the travel time to the destination with a visit to the point of interest associated with the advertisement from the current position of the mobile device 130. To compute the travel time, the advertising program 204 uses data from the geographic database to compute a new route from the current position to the location of the point of interest and from the location of the point of interest to the destination. For the new route, the point of interest associated with the advertisement is now a waypoint between the current location and the destination. Data from the geographic database 114 representing the length and speed limit of the road segments of the new route may be used to determine the travel time. Additionally, real-time traffic information may be used to identify delays along the new route and provide a more accurate estimate of the travel time to the destination including a stop at the point of interest associated with the advertisement. Moreover, historic traffic information may be used to estimate the travel time to the destination. Furthermore, the advertising program 204 obtains the transaction time 502(5) associated with the incentive of the advertisement from the advertisement database 116.

At step 610, the advertising program 204 provides the advertisement including the incentive to visit the point of interest if the mobile device 130 will reach the destination by the end time. In one embodiment, the advertising program 204 determines an expected arrival time of the mobile device 130 at the destination for the new route. In one embodiment, the expected arrival time is determined by adding the transaction time and the determined travel time from step 608 to the current time. If the arrival time is before the desired end time for the route, the advertising program 204 provides the advertisement including the incentive to visit the point of interest to the mobile device 130. If the arrival time is after the desired end time for the route, the advertising program 204 does not provide the advertisement including the incentive to visit the point of interest as an advertising message to the mobile device 130. The advertising program obtains the transaction time data 502(5) for the incentive of the advertisement from the advertisement database 116.

When the arrival time is after the desired end time for the route, the advertising program 204 may select a version of advertisement content for the point of interest from the advertisement data record 502 that does not include the incentive to visit the point of interest, such as a version of advertisement content of a banner advertisement. In another embodiment, advertising program 204 may return to step 606 and select a different advertisement data record 502 with a different point of interest.

The advertisement message containing the advertisement content selected in step 610 is provided to the mobile device 130. For example, if the advertising content selected in step 610 includes a coupon, the advertisement message provided to the mobile device 130 includes the coupon. For example, if the advertising content selected in step 610 includes a text and image banner, the advertisement message provided to the mobile device 130 includes the text and image banner. The advertisement message is transmitted to the mobile device 130 from the server 112 over the network 140.

Once the mobile device 130 receives the advertisement message, the advertisement message is provided to the user via the display 310 and/or other user interface of the mobile device 130. In one embodiment, the advertisement message is stored in memory 302 of the mobile device 130, and an application running on the mobile device 130 provides the advertisement to the end user of the mobile device. The end user views and interacts with the advertisement message via the display and user interface of the mobile device. For example, the end user may click to a landing page associated with the advertisement message, click to the coupon provided by the advertisement message, click to obtain a map displaying the point of interest associated with the advertisement message, click to call the point of interest associated with the advertisement message, click for directions to the point of interest associated with the advertisement message and/or click to obtain a website of the point of interest associated with the advertisement message.

The following describes an example of the route and time dependent advertising described above in conjunction with Figure 6. It's 8:00am on Monday morning and a commuter enters a request for a driving route from her current location to her office address as the destination in her mobile device 130. She specifies in the request that she start the route immediately and wants to end the route no later than 8:50am because she has a 9am conference call. As she drives along her route, the advertising program 204 using her current position identifies an advertisement by the local coffee shop from the advertisement database 116. The transaction time for the visit to the coffee shop to purchase a cup of coffee is 4 minutes. Based on current traffic conditions, the advertising program determines the estimated arrival time at her office is 8:44am for traveling from the current position of the mobile device to her office with a stop at the coffee shop to purchase a cup of coffee (current time of 8:20am, transaction time of 4 minutes and travel time of 20 minutes with the coffee shop as waypoint). Because she is expected to arrive at 8:44am that is prior to the end time of 8:50am, the advertising program 204 uses the advertising content including an incentive that may be redeemed by traveling to the coffee shop, such as a "$0.25 Off' coupon. The mobile device 130 provides the advertisement message with the coupon to the user.

The following describes another example of the route and time dependent advertising described above in conjunction with Figure 6. It's 8:00am on Monday morning and a commuter enters a request for a driving route from her current location to her office address as the destination in her mobile device 130. She specifies in the request that she start the route immediately and wants to end the route no later than 8:50am because she has a 9am conference call. As she drives along her route, the advertising program 204 using her current position identifies an advertisement by the local diner from the advertisement database 116. The transaction time for the visit to the diner for breakfast is 30 minutes. Based on current traffic conditions, the advertising program determines the estimated arrival time at her office is 9:10am for traveling from the current position of the mobile device to her office with a stop at the diner to have breakfast (current time of 8:20am, transaction time of 30 minutes and travel time of 20 minutes with the diner as waypoint). Because she is expected to arrive at 9:10am that is after the end time of 8:50am, the advertising program 204 does not use the advertising content including an incentive that may be redeemed by traveling to the diner, such as a 25% off promotion. Rather, the advertising program selects content that does not includes an incentive that may be redeemed by traveling to the diner, such as a banner advertisement with text and images describing the diner.

In an alternative embodiment, the steps for providing a route and time dependent advertisement are different. Rather than using the current position as basis for selecting the advertisement, the advertising program identifies advertisements for points of interest located proximate the calculated route prior to the mobile device traveling on the route. Additionally, the advertising program determines whether the mobile device can reach the destination with the point of interest as a waypoint. For example, it's 8:00am on Monday morning and a commuter enters a request for a driving route from her current location to her office address as the destination in her mobile device 130. She specifies in the request that she start the route immediately and wants to end the route no later than 8:50am because she has a 9am conference call. Based on current traffic conditions, the advertising program determines the estimated arrival time at her office is 8:40am providing an extra 10 minutes before she must arrive at the office. The advertising program 204 using the calculated route identifies an advertisement by the local coffee shop located proximate the route. The transaction time for the visit to the coffee shop to purchase a cup of coffee is 4 minutes. Because her route has 10 spare minutes prior to the end time of 8:50am, the advertising program 204 selects advertising content including an incentive that may be redeemed by traveling to the coffee shop, such as a "$0.25 Off' coupon. The mobile device 130 provides the advertisement message with the coupon to the user.

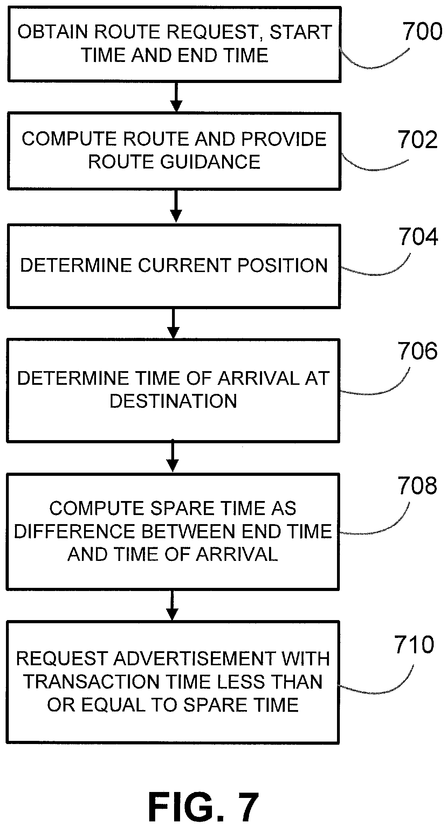

Figure 7 illustrates a flow chart of the steps for providing a route and time dependent advertisement according to another embodiment. In this embodiment, the navigation system determines an amount of spare time available in the route and requests an advertisement that has a transaction time less than or equal to the amount of spare time. This embodiment will be described below as being performed by an off-board navigation system comprising the mobile device 130 communicating with the server 112 running navigation applications 206 and the advertising application 204. Alternatively, an on-board navigation system that performs route calculation and guidance on the mobile device 130 may request an advertisement that has a transaction time less than or equal to the amount of spare time from the server 112 running the advertising application 204.

At step 700, the server 112 obtains a route request from a mobile device 130. The route request includes a starting location, a desired destination, a start time and an end time for the route. At step 702, the route calculation application 208 determines a solution route between the starting location and the destination location. The solution route is provided to the guidance application 210 that provides guidance messages for following the route. The server 112 provides the calculated route and guidance messages to the mobile device 130. As the mobile device 130 travels along the route, the navigation program 206 determines the current position of the mobile device 130, at step 704. In one embodiment, the server 112 periodically obtains the current position of the mobile device 130.

At step 706, the navigation program 206 determines a time of arrival at the destination from the current location. To compute the arrival time, the navigation program 206 computes a travel time for the remaining portion of the route and adds this travel time to a current time. At step 708, computes an amount of spare time in the route as a difference between the desired end time of the route and the determined arrival time. For example, the desired end time is 9:00am and the determined arrival time is 8:44am providing the spare time of 16 minutes.

At step 710, the navigation program 206 requests an advertisement with an incentive having a transaction time less than or equal to the spare time. The navigation program 206 sends the request to the advertising program 204. The request includes the computed spare time and the current position of the mobile device 130. In another embodiment, the request includes a user identification, demographic and/or user interest information for targeting the advertisement to the user of the mobile device. The advertising program 204 receives the request from the navigation program 206 and provides an advertisement message to the mobile device 130. The advertisement message includes an incentive to visit the point of interest that has a transaction time less than or equal to the spare time if such an advertisement message is available. In one embodiment, the advertisement program 204 identifies the advertisement based on the current position of the mobile device 130. The advertising program 204 accesses the advertisement database 116 to identify the advertisement data records 502 whose location data 502(3) matches the current position of the mobile device 130. The advertising program 204 further evaluates the transaction time data 502(5) of the advertisement data records to identify the advertisement and the incentive to include in the advertisement message that is less than or equal to the spare time. If the transaction time for the available incentives is greater than the spare time, the advertisement message does not include an incentive and advertisement message may include a banner advertisement. In other embodiments, the advertisement selected may be based upon demographics of the user of the mobile device, preferences and behavior patterns of the user of the mobile device.

In an alternative embodiment, the steps for providing a route and time dependent advertisement are different. Rather than using the current position as basis for selecting the advertisement, the navigation program determines the spare time in the route prior to departure on the route. The navigation program then requests the advertising program to provide an advertisement that may include an incentive for a points of interest located proximate the calculated route prior to the mobile device traveling on the route.

The following describes an example of the route and time dependent advertising described above in conjunction with Figure 7. It's 8:00am on Monday morning and a commuter enters a request for a driving route from her current location to her office address as the destination in her mobile device 130. She specifies in the request that she start the route immediately and wants to end the route no later than 8:50am. As she drives along her route, the navigation program 206 determines that the arrival time at the office will be 8:30am. The navigation program 206 computes the spare time as 20 minutes as the difference from the end time of 8:50am and the expected arrival time of 8:30am. The navigation program 206 sends a request to the advertising program 204 for an advertisement with an incentive that may be completed within the 20 minutes of spare time. The advertising program 204 provides an advertisement comprising a coupon to purchase a cup of coffee at a local coffee shop. The local coffee shop is 50 meters from the current position of the mobile device 130, and the transaction time for the visit to the coffee shop to purchase a cup of coffee is 4 minutes that is less than the 20 minutes of spare time. The mobile device 130 provides the advertisement message with the coupon for the coffee shop to the user.

The following example describes another example of the route and time dependent advertising described above in conjunction with Figure 7. It's 8:00am on Monday morning and a commuter enters a request for a driving route from her current location to her office address as the destination in her mobile device 130. She specifies in the request that she start the route immediately and wants to end the route no later than 8:50am. As she drives along her route, the navigation program 206 determines that the arrival time at the office will be 8:48am. The navigation program 206 computes the spare time as 2 minutes as the difference from the end time of 8:50am and the expected arrival time of 8:48am. The navigation program 206 sends a request to the advertising program 204 for an advertisement with an incentive that may be completed within the 2 minutes of spare time. The advertising program 204 identifies that the available advertisement for the current position of the mobile device is the coupon from the coffee shop that has a transaction time of 4 minutes. Because the transaction time is larger than the spare time, the advertising program 204 does not use the advertising content including an incentive of the coupon for the coffee shop. Rather, the advertising program selects content that does not include the promotion that may be redeemed by traveling to the coffee shop, such as a banner advertisement with text and images describing the coffee shop. The mobile device 130 is provided the advertisement message with the banner advertisement.

It is intended that the foregoing detailed description be regarded as illustrative rather than limiting and that it is understood that the following claims are intended to define the scope of the invention. The claims should not be read as limited to the described order or elements unless stated to that effect. Therefore, all embodiments that come within the scope of the following claims thereto are claimed as the invention.

## Claims

1. A computer implemented method of operating a navigation system to provide an advertisement, the method comprising:
obtaining (602) a desired arrival time at a destination;
generating a first route from a starting location to the destination;
identifying an advertisement data record from an advertisement database, wherein the advertisement data record is associated with a point of interest and includes a first version of advertisement content and a second version of advertisement content, the first version including a coupon incentive, a promotion incentive or a limited time offer incentive for a product or service at the point of interest and the second version not including any of these incentives;
generating a second route from a current location of the navigation system to the destination including traveling to the point of interest to obtain the product or the service, wherein the second route is different to the first route;
determining a travel time for the second route;obtaining, from the advertisement data record, an obtaining time representing a time required to obtain the product or the service at the point of interest;
determining a new arrival time from the addition of a current time, the determined travel time for the second route and the obtaining time;
if the new arrival time is before the desired arrival time, providing (610) the first version of advertisement content; and
if the new arrival time is after the desired arrival time, providing the second version of advertisement content.

2. The method of Claim 1 wherein the advertisement data record is identified based on the current location of the navigation system.

3. The method of Claim 1 further comprising: providing the first version of advertisement content or the second version of advertisement content to a user of the navigation system.

4. The method of Claim 1 wherein the advertisement data record is identified based on the proximity of the associated point of interest to the first route.

5. A system for providing an advertisement comprising:
a processor, a geographic database (114) associated with the processor, an advertisement database (116) associated with the processor, a navigation program executed on the processor and an advertising program executed on the processor, wherein the navigation program and the advertising program are configured to:
obtain a desired arrival time at a destination;
generate a first route from a starting location to the destination;
identify an advertisement data record from an advertisement database, wherein the advertisement data record is associated with a point of interest and includes a first version of advertisement content and a second version of advertisement content, the first version including a coupon incentive, a promotion incentive or a limited time offer incentive for a product or service at the point of interest and the second version not including any of these incentives;
generate a second route from a current location of a mobile device to the destination including traveling to the point of interest to obtain the product or the service, wherein the second route is different to the first route;
determine a travel time for the second route;
obtain, from the advertisement data record, an obtaining time representing a time required to obtain the product or the service at the point of interest;
determine a new arrival time from the addition of a current time, the travel time for the second route and the obtaining time;
if the new arrival time is before the desired arrival time, provide (610) the first version of advertisement content; and
if the new arrival time is after the desired arrival time, provide the second version of advertisement content.

6. The system of Claim 5 wherein the advertising program is configured to determine (604) a current position of the mobile device (130).

7. The system of Claim 5 wherein the advertising program is configured to identify the advertisement data record from the advertisement database (116) based on a current location of the mobile device (130).

8. The system of Claim 5 wherein the advertising program is configured to identify the advertisement data record based on the proximity of the associated point of interest to the first route.

9. An advertising program configured to:
obtain a desired arrival time at a destination; identify an advertisement data record from an advertisement database, wherein the advertisement data record is associated with a point of interest and includes a first version of advertisement content and a second version of advertisement content, the first version including a coupon incentive, a promotion incentive or a limited time offer incentive for a product or service at the point of interest and the second version not including any of these incentives;
obtain a travel time for a route from a current location of a mobile device to the destination including travelling to the point of interest to obtain the product or service;
obtain, from the advertisement data record, an obtaining time representing a time required to obtain the product or the service at the point of interest;
determine a new arrival time from the addition of a current time, the travel time and the obtaining time;
if the new arrival time is before the desired arrival time, provide (610) the first version of advertisement content; and
if the new arrival time is after the desired arrival time, provide the second version of advertisement content.

10. A processor for providing an advertisement, the processor configured to:
obtain a desired arrival time at a destination;
generate a first route from a starting location to the destination;
identify an advertisement data record from an advertisement database, wherein the advertisement data record is associated with a point of interest and includes a first version of advertisement content and a second version of advertisement content, the first version including a coupon incentive, a promotion incentive or a limited time offer incentive for a product or service at the point of interest and the second version not including any of these incentives;
generate a second route from a current location of a mobile device to the destination including traveling to the point of interest to obtain the product or the service, wherein the second route is different to the first route;
determine a travel time for the second route;
obtain, from the advertisement data record, an obtaining time representing a time required to obtain the product or the service at the point of interest;
determine a new arrival time from the addition of a current time, the travel time for the second route and the obtaining time;
if the new arrival time is before the desired arrival time, provide (610) the first version of advertisement content; and
if the new arrival time is after the desired arrival time, provide the second version of advertisement content.

## Patentansprüche

1. Computerimplementiertes Verfahren zum Betreiben eines Navigationssystems, um eine Anzeige zur Verfügung zu stellen, wobei das Verfahren Folgendes umfasst:
Erhalten (602) einer gewünschten Ankunftszeit an einem Zielort;
Erzeugen einer ersten Route von einem Startort zum Zielort;
Identifizieren eines Werbungsdatensatzes aus einer Werbungsdatenbank, wobei der Werbungsdatensatz mit einem Punkt von Interesse verknüpft ist und eine erste Version von Werbungsinhalt und eine zweite Version von Werbungsinhalt enthält, wobei die erste Version einen Couponanreiz, einen Promotionsanreiz oder einen zeitlich begrenzten Angebotsanreiz für ein Produkt oder eine Dienstleistung am Punkt von Interesse enthält, und die zweite Version keinen dieser Anreize enthält;
Erzeugen einer zweiten Route von einem aktuellen Ort des Navigationssystems zu dem Zielort, einschließlich einer Fahrt zu dem Punkt von Interesse, um das Produkt oder die Dienstleistung zu erhalten, wobei sich die zweite Route von der ersten Route unterscheidet;
Bestimmen einer Fahrzeit für die zweite Route;
Erhalten einer Erfassungszeit aus dem Werbungsdatensatz, die eine Zeit darstellt, die erforderlich ist, um das Produkt oder die Dienstleistung an dem Punkt von Interesse zu erhalten;
Bestimmen einer neuen Ankunftszeit aus der Addition einer aktuellen Zeit, der bestimmten Fahrzeit für die zweite Route und der Erfassungszeit;
wenn die neue Ankunftszeit vor der gewünschten Ankunftszeit liegt, Bereitstellen (610) der ersten Version des Werbungsinhalts; und
wenn die neue Ankunftszeit nach der gewünschten Ankunftszeit liegt, Bereitstellen der zweiten Version des Werbungsinhalts.

2. Verfahren nach Anspruch 1, wobei der Werbungsdatensatz basierend auf dem aktuellen Ort des Navigationssystems identifiziert wird.

3. Verfahren nach Anspruch 1, ferner Folgendes umfassend: Bereitstellen der ersten Version des Werbungsinhalts oder der zweiten Version des Werbungsinhalts an einen Benutzer des Navigationssystems.

4. Verfahren nach Anspruch 1, wobei der Werbungsdatensatz basierend auf der Nähe des verknüpften Punkts von Interesse zu der ersten Route identifiziert wird.

5. System zum Bereitstellen einer Werbung, Folgendes umfassend:
einen Prozessor, eine mit dem Prozessor verknüpfte geographische Datenbank (114), eine mit dem Prozessor verknüpfte Werbungsdatenbank (116), ein auf dem Prozessor ausgeführtes Navigationsprogramm und ein auf dem Prozessor ausgeführtes Werbungsprogramm, wobei das Navigationsprogramm und das Werbungsprogramm konfiguriert sind zum:
Erhalten einer gewünschten Ankunftszeit an einem Zielort;
Erzeugen einer ersten Route von einem Startort zum Zielort;
Identifizieren eines Werbungsdatensatzes aus einer Werbungsdatenbank, wobei der Werbungsdatensatz mit einem Punkt von Interesse verknüpft ist und eine erste Version von Werbungsinhalt und eine zweite Version von Werbungsinhalt enthält, wobei die erste Version einen Couponanreiz, einen Promotionsanreiz oder einen zeitlich begrenzten Angebotsanreiz für ein Produkt oder eine Dienstleistung am Punkt von Interesse enthält, und die zweite Version keinen dieser Anreize enthält;
Erzeugen einer zweiten Route von einem aktuellen Ort eines Mobilgeräts zu dem Zielort, einschließlich einer Fahrt zu dem Punkt von Interesse, um das Produkt oder die Dienstleistung zu erhalten, wobei sich die zweite Route von der ersten Route unterscheidet;
Bestimmen einer Fahrzeit für die zweite Route;
Erhalten einer Erfassungszeit aus dem Werbungsdatensatz, die eine Zeit darstellt, die erforderlich ist, um das Produkt oder die Dienstleistung an dem Punkt von Interesse zu erhalten;
Bestimmen einer neuen Ankunftszeit aus der Addition einer aktuellen Zeit, der Fahrzeit für die zweite Route und der Erfassungszeit;
wenn die neue Ankunftszeit vor der gewünschten Ankunftszeit liegt, Bereitstellen (610) der ersten Version des Werbungsinhalts; und
wenn die neue Ankunftszeit nach der gewünschten Ankunftszeit liegt, Bereitstellen der zweiten Version des Werbungsinhalts.

6. System nach Anspruch 5, wobei das Werbungsprogramm konfiguriert ist, eine aktuelle Position des Mobilgeräts (130) zu bestimmen (604).

7. System nach Anspruch 5, wobei das Werbungsprogramm konfiguriert ist, den Werbungsdatensatz aus der Werbungsdatenbank (116) basierend auf einem aktuellen Standort des Mobilgeräts (130) zu identifizieren.

8. System nach Anspruch 5, wobei das Werbungsprogramm konfiguriert ist, den Werbungsdatensatz basierend auf der Nähe des zugehörigen Punkts von Interesse zu der ersten Route zu identifizieren.

9. Werbungsprogramm, konfiguriert zum:
Erhalten einer gewünschten Ankunftszeit an einem Zielort;
Identifizieren eines Werbungsdatensatzes aus einer Werbungsdatenbank, wobei der Werbungsdatensatz mit einem Punkt von Interesse verknüpft ist und eine erste Version von Werbungsinhalt und eine zweite Version von Werbungsinhalt enthält, wobei die erste Version einen Couponanreiz, einen Promotionsanreiz oder einen zeitlich begrenzten Angebotsanreiz für ein Produkt oder eine Dienstleistung am Punkt von Interesse enthält, und die zweite Version keinen dieser Anreize enthält;
Erhalten einer Fahrzeit für eine Route von einem aktuellen Ort eines Mobilgeräts zu dem Zielort, einschließlich einer Fahrt zu dem Punkt von Interesse, um das Produkt oder die Dienstleistung zu erhalten;
Erhalten einer Erfassungszeit aus dem Werbungsdatensatz, die eine Zeit darstellt, die erforderlich ist, um das Produkt oder die Dienstleistung an dem Punkt von Interesse zu erhalten;
Bestimmen einer neuen Ankunftszeit aus der Addition einer aktuellen Zeit, der Fahrzeit und der Erfassungszeit;
wenn die neue Ankunftszeit vor der gewünschten Ankunftszeit liegt, Bereitstellen (610) der ersten Version des Werbungsinhalts; und
wenn die neue Ankunftszeit nach der gewünschten Ankunftszeit liegt, Bereitstellen der zweiten Version des Werbungsinhalts.

10. Prozessor zum Bereitstellen einer Werbung, wobei der Prozessor konfiguriert ist zum:
Erhalten einer gewünschten Ankunftszeit an einem Zielort;
Erzeugen einer ersten Route von einem Startort zum Zielort;
Identifizieren eines Werbungsdatensatzes aus einer Werbungsdatenbank, wobei der Werbungsdatensatz mit einem Punkt von Interesse verknüpft ist und eine erste Version von Werbungsinhalt und eine zweite Version von Werbungsinhalt enthält, wobei die erste Version einen Couponanreiz, einen Promotionsanreiz oder einen zeitlich begrenzten Angebotsanreiz für ein Produkt oder eine Dienstleistung am Punkt von Interesse enthält, und die zweite Version keinen dieser Anreize enthält;
Erzeugen einer zweiten Route von einem aktuellen Ort eines Mobilgeräts zu dem Zielort, einschließlich einer Fahrt zu dem Punkt von Interesse, um das Produkt oder die Dienstleistung zu erhalten, wobei sich die zweite Route von der ersten Route unterscheidet;
Bestimmen einer Fahrzeit für die zweite Route;
Erhalten einer Erfassungszeit aus dem Werbungsdatensatz, die eine Zeit darstellt, die erforderlich ist, um das Produkt oder die Dienstleistung an dem Punkt von Interesse zu erhalten;
Bestimmen einer neuen Ankunftszeit aus der Addition einer aktuellen Zeit, der Fahrzeit für die zweite Route und der Erfassungszeit;
wenn die neue Ankunftszeit vor der gewünschten Ankunftszeit liegt, Bereitstellen (610) der ersten Version des Werbungsinhalts; und
wenn die neue Ankunftszeit nach der gewünschten Ankunftszeit liegt, Bereitstellen der zweiten Version des Werbungsinhalts.

## Revendications

1. Procédé mis en oeuvre par ordinateur pour faire fonctionner un système de navigation afin de fournir une publicité, le procédé consistant à :
obtenir (602) une heure d'arrivée souhaitée à une destination ;
générer un premier itinéraire à partir d'un lieu de départ à la destination ;
identifier un enregistrement de données publicitaires à partir d'une base de données publicitaire, dans lequel ledit enregistrement est associé à un point d'intérêt et comprend une première version du contenu publicitaire et une seconde version du contenu publicitaire, la première version comprenant un bon incitatif, une incitation promotionnelle ou une incitation à durée limitée pour un produit ou un service au point d'intérêt et la seconde version ne comprenant aucune de ces incitations ;
générer un second itinéraire depuis un emplacement actuel du système de navigation jusqu'à la destination, y compris le trajet vers le point d'intérêt pour obtenir le produit ou le service, dans lequel le second itinéraire est différent du premier itinéraire ;
déterminer une durée de trajet pour le second itinéraire ;
obtenir, à partir de l'enregistrement de données publicitaires, un temps d'obtention représentant un temps nécessaire pour obtenir le produit ou le service au point d'intérêt ;
déterminer une nouvelle heure d'arrivée à partir de l'ajout d'une heure actuelle, de la durée de trajet déterminée pour le second itinéraire et du temps d'obtention ;
si la nouvelle heure d'arrivée est antérieure à l'heure d'arrivée souhaitée, fournir (610) la première version du contenu publicitaire ; et
si la nouvelle heure d'arrivée est postérieure à l'heure d'arrivée souhaitée, fournir la seconde version du contenu publicitaire.

2. Procédé selon la revendication 1, dans lequel l'enregistrement de données publicitaires est identifié sur la base de l'emplacement actuel du système de navigation.

3. Procédé selon la revendication 1, consistant en outre à fournir la première version du contenu publicitaire ou de la seconde version du contenu publicitaire à un utilisateur du système de navigation.

4. Procédé selon la revendication 1, dans lequel l'enregistrement de données publicitaires est identifié sur la base de la proximité du point d'intérêt associé au premier itinéraire.

5. Système conçu pour fournir une publicité comprenant :
un processeur, une base de données géographique (114) associée au processeur, une base de données publicitaire (116) associée au processeur, un programme de navigation exécuté sur le processeur et un programme publicitaire exécuté sur le processeur, dans lequel le programme de navigation et le programme publicitaire sont configurés pour :
obtenir une heure d'arrivée souhaitée à une destination ;
générer un premier itinéraire à partir d'un lieu de départ à la destination ;
identifier un enregistrement de données publicitaires à partir d'une base de données publicitaire, dans lequel l'enregistrement de données publicitaires est associé à un point d'intérêt et comprenant une première version du contenu publicitaire et une seconde version du contenu publicitaire, la première version comprenant un bon incitatif, une incitation promotionnelle ou une incitation à durée limitée pour un produit ou un service au point d'intérêt et la seconde version ne comprenant aucune de ces incitations ;
générer un second itinéraire à partir de l'emplacement actuel d'un périphérique mobile jusqu'à la destination, y compris le trajet vers le point d'intérêt pour obtenir le produit ou le service, dans lequel le second itinéraire est différent du premier ;
déterminer une durée de trajet pour le second itinéraire ;
obtenir, à partir de l'enregistrement de données publicitaires, un temps d'obtention représentant un temps nécessaire pour obtenir le produit ou le service au point d'intérêt ;
déterminer une nouvelle heure d'arrivée à partir de l'ajout d'une heure actuelle, la durée de trajet pour le second itinéraire et l'heure d'obtention ;
si la nouvelle heure d'arrivée est antérieure à l'heure d'arrivée souhaitée, fournir (610) la première version du contenu publicitaire ; et
si l'heure d'arrivée nouvelle est postérieure à l'heure d'arrivée souhaitée, fournir la seconde version du contenu publicitaire.

6. Système selon la revendication 5, dans lequel le programme publicitaire est configuré pour déterminer (604) une position actuelle du périphérique mobile (130).

7. Système selon la revendication 5, dans lequel le programme publicitaire est configuré pour identifier l'enregistrement de données publicitaires provenant de la base de données publicitaire (116) sur la base d'un emplacement actuel du périphérique mobile (130).

8. Système selon la revendication 5, dans lequel le programme publicitaire est configuré pour identifier l'enregistrement de données publicitaires en fonction de la proximité du point d'intérêt associé au premier itinéraire.

9. Programme publicitaire configuré pour :
obtenir une heure d'arrivée souhaitée à une destination ;
identifier un enregistrement de données publicitaires à partir d'une base de données publicitaire, dans lequel l'enregistrement de données publicitaires est associé à un point d'intérêt et comprenant une première version du contenu publicitaire et une seconde version du contenu publicitaire, la première version comprenant un bon incitatif, une incitation promotionnelle ou une incitation à durée limitée pour un produit ou un service au point d'intérêt et la seconde version ne comprenant aucune de ces incitations ;
obtenir une durée de trajet pour un itinéraire depuis l'emplacement actuel d'un périphérique mobile jusqu'à la destination, y compris le trajet jusqu'au point d'intérêt pour obtenir le produit ou le service ;
obtenir, à partir de l'enregistrement de données publicitaires, un temps d'obtention représentant un temps nécessaire pour obtenir le produit ou le service au point d'intérêt ;
déterminer une nouvelle heure d'arrivée à partir de l'ajout d'une heure actuelle, de la durée de trajet et du temps d'obtention ;
si la nouvelle heure d'arrivée est antérieure à l'heure d'arrivée souhaitée, fournir (610) la première version du contenu publicitaire ; et
si la nouvelle heure d'arrivée est postérieure à l'heure d'arrivée souhaitée, fournir la seconde version du contenu publicitaire.

10. Processeur conçu pour fournir une publicité, le processeur étant configuré pour :
obtenir une heure d'arrivée souhaitée à une destination ;
générer un premier itinéraire à partir d'un lieu de départ à la destination ;
identifier un enregistrement de données publicitaires à partir d'une base de données publicitaire, dans lequel l'enregistrement de données publicitaires est associé à un point d'intérêt et comprenant une première version du contenu publicitaire et une seconde version du contenu publicitaire, la première version comprenant un bon incitatif, une incitation promotionnelle ou une incitation à durée limitée pour un produit ou un service au point d'intérêt et la seconde version ne comprenant aucune de ces incitations ;
générer un second itinéraire à partir de l'emplacement actuel d'un périphérique mobile jusqu'à la destination, y compris le trajet vers le point d'intérêt pour obtenir le produit ou le service, dans lequel le second itinéraire est différent du premier ;
déterminer une durée de trajet pour le second itinéraire ;
obtenir, à partir de l'enregistrement de données publicitaires, un temps d'obtention représentant un temps nécessaire pour obtenir le produit ou le service au point d'intérêt ;
déterminer une nouvelle heure d'arrivée à partir de l'ajout d'une heure actuelle, la durée de trajet pour le second itinéraire et l'heure d'obtention ;
si la nouvelle heure d'arrivée est antérieure à l'heure d'arrivée souhaitée, fournir (610) la première version du contenu publicitaire ; et
si la nouvelle heure d'arrivée est postérieure à l'heure d'arrivée souhaitée, fournir la seconde version du contenu publicitaire.
